# EUROPEAN PATENT APPLICATION

(11) **EP 4 451 240 A1**
(43) Date of publication of application: **23.10.2024**
(21) Application number: 22906893.7
(22) Date of filing: 25.05.2022
(51) Int. Cl.: G07G 1/12

(54) **MERCHANDISE SALES DATA PROCESSING DEVICE AND PROGRAM**

(30) Priority: 16.12.2021 JP 2021204472
(71) Applicant: Toshiba TEC Kabushiki Kaisha, Tokyo 141-8562 (JP)
(72) Inventor: KOMORI, Ryuji, Izunokuni-shi, Shizuoka 410-2392 (JP)
(74) Representative: Bandpay & Greuter
(86) International application number: PCT/JP2022/021376
(87) International publication number: WO 2023/112356

(57) **Abstract**

A merchandise sales data processing device of an embodiment includes: an acquisition part that acquires identification information on merchandise in accordance with a customer operation; a registration part that registers information related to a purchase amount of the merchandise corresponding to the identification information; a calculation part that calculates a total amount of the merchandise based on the information registered by the registration part; a notification part that executes processing of calling a clerk when the total amount exceeds a predetermined upper limit amount; and a restriction part that restricts the customer operation related to registration of the merchandise when the total amount exceeds the predetermined upper limit amount.

## Description

### FIELD

An embodiment of the present invention relates to a merchandise sales data processing device and a program.

### BACKGROUND

In stores such as supermarkets and mass retailers, merchandise sales data processing devices of a type in which a customer himself/herself performs operations related to a commercial transaction of merchandise are used. For example, in a self-type of merchandise sales data processing device, a customer himself/herself performs a registration operation of registering merchandise to be purchased and an operation related to settlement of the registered merchandise.

By the way, in the above-described self-type merchandise sales data processing device, a customer can register desired merchandise. Note, however, that, when an amount of the registered merchandise is high, a clerk preferably makes a confirmation from the viewpoint of crime prevention.

There has been proposed a technique for displaying a notification screen indicating that a clerk is being called in a case where a total amount of merchandise registered by a registration device exceeds a certain amount in a settlement device of a type in which a clerk performs a registration operation with the registration device and a customer performs settlement operation with the settlement device (also referred to as semi-self-type).

Unfortunately, the conventional technique is specialized for the semi-self-type, so that it is difficult to apply the technique to self-type of merchandise sales data processing devices. Furthermore, in the conventional technique, a clerk is called at the time of execution of settlement processing. For example, when a part of registered merchandise is canceled, merchandise determined to be in one transaction is canceled, which may complicate an operation related to cancellation.

### SUMMARY OF THE INVENTION

### Problem to be Solved by the Invention

A program to be solved by the present invention is to provide a merchandise sales data processing device and a program that enable a clerk to efficiently confirm registered merchandise in a merchandise sales data processing device of a type in which a customer himself/herself performs a registration operation.

### Means for Solving Problem

A merchandise sales data processing device of an embodiment includes: an acquisition part that acquires identification information on merchandise in accordance with a customer operation; a registration part that registers information related to a purchase amount of the merchandise corresponding to the identification information; a calculation part that calculates a total amount of the merchandise based on the information registered by the registration part; a notification part that executes processing of calling a clerk when the total amount exceeds a predetermined upper limit amount; and a restriction part that restricts the customer operation related to registration of the merchandise when the total amount exceeds the predetermined upper limit amount.

### BRIEF DESCRIPTION OF DRAWINGS

FIG. 1 illustrates one example of a configuration of a POS system according to an embodiment.
FIG. 2 illustrates one example of a hardware configuration of a POS terminal according to the embodiment.
FIG. 3 illustrates one example of a functional configuration of the POS terminal according to the embodiment.
FIG. 4 illustrates one example of an upper limit excess screen displayed on a display unit of the POS terminal according to the embodiment.
FIG. 5 is a flowchart illustrating one example of processing executed by the POS terminal of the embodiment.

### DETAILED DESCRIPTION

An embodiment of a merchandise sales data processing device and a program will be described in detail below with reference to the drawings. Note that the embodiment to be described below is one embodiment of the merchandise sales data processing device and the program, and does not limit the configuration, specification, and the like thereof. The merchandise sales data processing device according to the embodiment is an example of application to a self-type of point of sales (POS) terminal introduced in a store such as a supermarket.

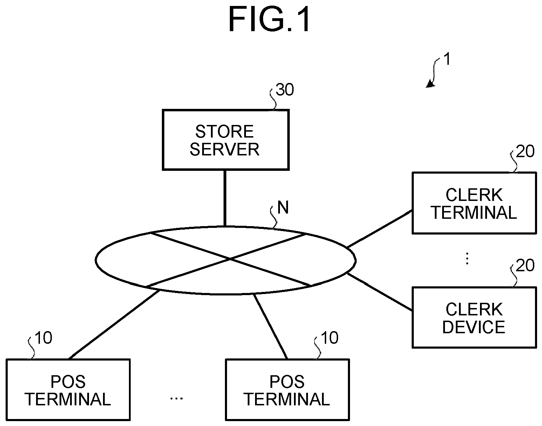

FIG. 1 illustrates one example of a configuration of a POS system 1 according to the embodiment. The POS system 1 includes a POS terminal 10, a clerk terminal 20, and a store server 30. The POS system 1 connects the POS terminal 10, the clerk terminal 20, and the store server 30 via a wired or wireless network N. The network N is, for example, a local area network (LAN) installed in a store.

The POS terminal 10 is a self-type of merchandise sales data processing device. The POS terminal 10 executes registration processing of registering merchandise to be purchased and settlement processing for the registered merchandise in accordance with a customer operation. Either or both of the registration processing and the settlement processing are hereinafter also referred to as merchandise sales data processing.

The clerk terminal 20 is a terminal device operated by a clerk (e.g., employee) in a store. The clerk terminal 20 may be a stationary terminal device such as a personal computer (PC) or a mobile terminal device such as a smartphone.

The store server 30 is a server device installed in a store. The store server 30 comprehensively manages merchandise sales data processing and the like performed by the POS terminal 10. For example, the store server 30 stores and manages a merchandise master 1052 and a responsible-person master 1053 to be described later used for the merchandise sales data processing, and stores and manages merchandise sales data generated in the merchandise sales data processing of the POS terminal 10.

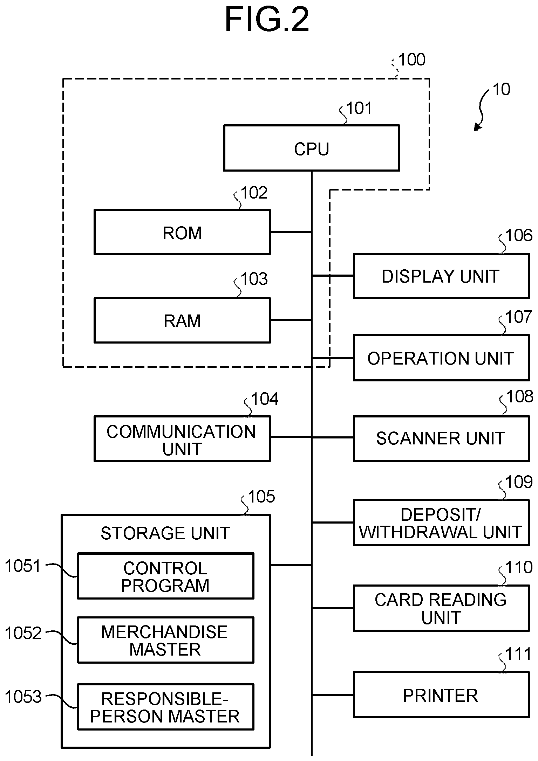

Next, a configuration of the above-described POS terminal 10 will be described. First, a hardware configuration of the POS terminal 10 will be described with reference to FIG. 2. Here, FIG. 2 illustrates one example of the hardware configuration of the POS terminal 10.

As illustrated in FIG. 2, the POS terminal 10 includes a central processing unit (CPU) 101, a read only memory (ROM) 102, and a random access memory (RAM) 103.

The CPU 101 is one example of a processor, and comprehensively controls the operation of the POS terminal 10. The ROM 102 stores various programs. The RAM 103 is workspace in which programs and various pieces of data are developed. The CPU 101, the ROM 102, and the RAM 103 are connected via a bus or the like, and constitute a control unit 100 having a computer configuration. The control unit 100 executes various pieces of processing by the CPU 101 operating in accordance with a control program 1051, which is stored in the ROM 102 or a storage unit 105 and developed in the RAM 103.

The control unit 100 is connected to a communication unit 104 and the storage unit 105 via the bus or the like. The communication unit 104 is a communication interface connectable to the network N. The communication unit 104 communicates with external devices such as the clerk terminal 20 and the store server 30 via the network N.

The storage unit 105 includes an HDD and a flash memory. The storage unit 105 maintains stored contents even when the power is turned off. The storage unit 105 stores, for example, the control program 1051.

The control program 1051 controls the operation of the POS terminal 10. The control unit 100 (CPU 101) implements a functional unit to be described later in cooperation with the control program 1051.

Furthermore, the storage unit 105 stores the merchandise master 1052, the responsible-person master 1053, and the like.

The merchandise master 1052 is a master file that stores information on each piece of merchandise to be sold in a store. For example, the merchandise master 1052 stores a merchandise name, a type, a price, and the like of a piece of merchandise corresponding to a merchandise code in association with the merchandise code. Here, the merchandise code is one example of identification information that enables identification of a piece of merchandise. The merchandise name is a name of a piece of merchandise. The type is information indicating the type of a piece of merchandise. The price is the price of a piece of merchandise.

The responsible-person master 1053 is a master file that stores information on clerks. The responsible-person master 1053 stores a clerk code of a clerk who has authority to cancel a locked state of the POS terminal 10 to be described later among clerks who work in a store. Here, the clerk code is one example of the identification information that enables identification of a clerk. Furthermore, in the embodiment, the clerk code also functions as one example of a cancellation code.

Note that, although, in the embodiment, the POS terminal 10 locally holds the merchandise master 1052 and the responsible-person master 1053, this is not a limitation. Another device may hold the merchandise master 1052 and the responsible-person master 1053. For example, the POS terminal 10 may refer to one or both of the merchandise master 1052 and the responsible-person master 1053 stored in the store server 30.

Furthermore, a display unit 106, an operation unit 107, a scanner unit 108, a deposit/withdrawal unit 109, a card reading unit 110, a printer 111, and the like are connected to the control unit 100 via a bus or the like.

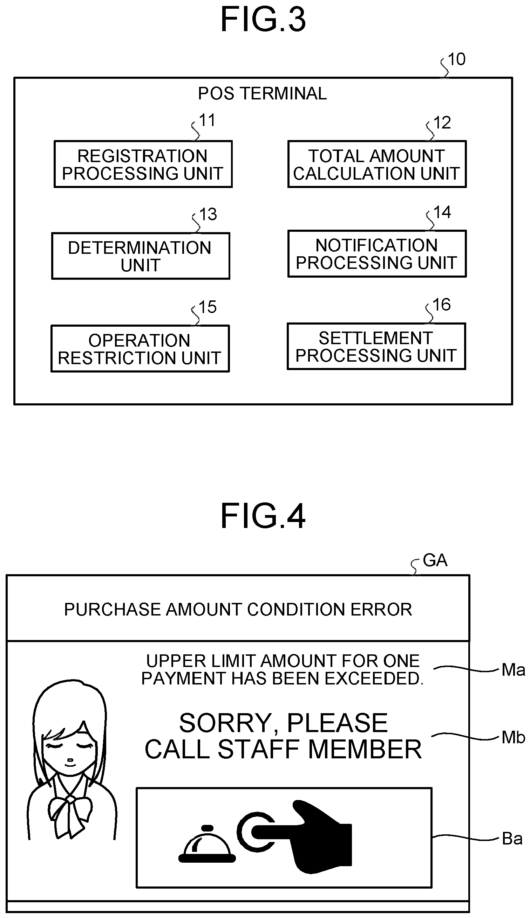

The display unit 106 is a display device such as a liquid crystal display. The display unit 106 displays various screens under the control of the control unit 100. For example, the display unit 106 displays an operation screen for supporting a registration operation and a settlement operation for merchandise and an upper limit excess screen (see FIG. 4) to be described later. Note that the display unit 106 may include a touch panel.

The operation unit 107 includes various operation keys and pointing devices, and receives an operation of an operator. For example, the operation unit 107 includes a start key, a numeric key, a subtotal key (also referred to as current total key, finishing key, and like), and a confirmation key. The start key is used for giving an instruction to start a registration operation. The numeric key is used for inputting a merchandise code, the number of pieces of merchandise, and the like. The subtotal key is used for giving an instruction to end the registration operation. The confirmation key is used for confirming an amount paid by a customer. Note that the operation unit 107 may be a touch panel provided on a display surface of the display unit 106.

The scanner unit 108 is a reading device capable of reading a code symbol such as a barcode and a twodimensional code. For example, the scanner unit 108 reads a merchandise code from a code symbol attached to a piece of merchandise, and outputs the read merchandise code to the CPU 101. For example, the scanner unit 108 reads information related to commercial code settlement from a code symbol used for code settlement, and outputs the read information to the CPU 101.

The deposit/withdrawal unit 109 receives cash (bank bill or coin) injected into a currency injection port (not illustrated), sorts the currency by type, and accommodates the currency. Furthermore, the deposit/withdrawal unit 109 pays out change from a payment port (not illustrated) under the control of the control unit 100.

The card reading unit 110 is a reading device that reads information from a card medium such as a magnetic card and an IC card. For example, the card reading unit 110 reads information related to credit card settlement and electronic settlement from a card medium such as a credit card and an electronic money card, and outputs the read information to the CPU 101.

The printer 111 is a printing device such as a thermal printer. The printer 111 prints a receipt indicating the contents of a transaction at the end of settlement processing thereof under the control of the control unit 100.

Next, a functional configuration of the POS terminal 10 will be described with reference to FIG. 3. Here, FIG. 3 illustrates one example of the functional configuration of the POS terminal 10.

As illustrated in FIG. 3, the POS terminal 10 includes, as functional units, a registration processing unit 11, a total amount calculation unit 12, a determination unit 13, a notification processing unit 14, an operation restriction unit 15, and a settlement processing unit 16. Specifically, the control unit 100 (CPU 101) of the POS terminal 10 implements each of the above-described functional units by executing the control program 1051.

Note that, although, in the embodiment, each of the above-described functional units has a software configuration implemented by cooperation of the processor and the control program 1051, some or all of the functional units may have a hardware configuration implemented by a dedicated circuit and the like.

The registration processing unit 11 is one example of an acquisition part and a registration part. The registration processing unit 11 executes processing of registering merchandise to be purchased by a customer. Specifically, the registration processing unit 11 acquires a merchandise code of a piece of merchandise to be purchased by the customer via the scanner unit 108 or the like in accordance with a customer operation. The registration processing unit 11 specifies merchandise information on a piece of merchandise corresponding to the acquired merchandise code from the merchandise master 1052. Then, the registration processing unit 11 registers, in the RAM 103 and the like, sales data with which a purchase amount of the piece of merchandise can be specified based on the specified merchandise information on the piece of merchandise. Here, the purchase amount means an amount obtained by multiplying the price of a piece of merchandise by the number of purchased pieces of merchandise.

For example, the registration processing unit 11 generates sales data by associating the specified merchandise information on the piece of merchandise with the separately input number of (number of purchased) pieces of merchandise. Then, the registration processing unit 11 stores the generated sales data in the RAM 103 or the like to register the merchandise to be purchased by the customer. Note that the breakdown of the sales data is not limited thereto. For example, the sales data may be obtained by associating a merchandise code with the number of purchased pieces of merchandise.

The total amount calculation unit 12 is one example of a calculation part. The total amount calculation unit 12 calculates the total amount of the merchandise registered by the registration processing unit 11. Specifically, the total amount calculation unit 12 calculates the total amount of merchandise based on sales data registered during one transaction. Here, a period of one transaction means a period from when an instruction to start merchandise registration is given to when an instruction to end the merchandise registration is given. The total amount calculation unit 12 calculates the total amount by calculating an amount obtained by multiplying the price of a piece of merchandise by the number of purchased pieces of merchandise for each piece of sales data and adding up the calculated amounts.

Note that the timing when the total amount calculation unit 12 calculates the total amount is not particularly limited as long as the timing is before settlement processing. For example, the total amount calculation unit 12 may calculate the total amount each time a piece of merchandise is registered, that is, each time sales data is registered. Furthermore, the total amount calculation unit 12 may calculate the total amount at the timing when an operation of the subtotal key is received, that is, at the timing when an instruction to end merchandise registration is given.

The determination unit 13 is one example of a determination part. The determination unit 13 determines whether or not the total amount calculated by the total amount calculation unit 12 exceeds a predetermined amount (hereinafter, upper limit amount). Here, although any upper limit amount can be set, for example, it is preferable to set an amount for which confirmation in a store is determined to be necessary (high amount). Furthermore, for example, an amount for which a customer signature is necessary in credit card settlement and the like and an amount for which issuance of a revenue stamp is necessary may be set.

The notification processing unit 14 is one example of a notification part. When the determination unit 13 determines that the total amount exceeds the upper limit amount, the notification processing unit 14 executes notification processing for calling a clerk. For example, the notification processing unit 14 causes the display unit 106 to display an operation screen (hereinafter, upper limit excess screen) through which the clerk can be called.

Here, FIG. 4 illustrates one example of the upper limit excess screen displayed on the display unit 106 of the POS terminal 10. As illustrated in FIG. 4, for example, a message Ma and a message Mb are displayed on an upper limit excess screen GA. The message Ma gives a notification indicating that the upper limit amount has been exceeded. The message Mb gives a notification to prompt calling of a clerk (staff member). Furthermore, an operation button Ba is displayed on the upper limit excess screen GA. The operation button Ba is one example of an operator for calling a clerk.

When the operation button Ba is operated, the notification processing unit 14 transmits a call notification to the clerk terminal 20. In contrast, the clerk terminal 20 that has received the call notification notifies a clerk that calling has been made from the POS terminal 10 by screen display or voice output. Then, a clerk who has responded to the call notification moves to the POS terminal 10.

Note that the notification processing unit 14 may transmit identification information that enables identification of the POS terminal 10 of the notification processing unit 14 itself (e.g., terminal ID) with the identification information being included in the call notification. This enables the clerk to easily specify the POS terminal 10 that has transmitted the call notification, so that convenience can be improved.

Note that, although, in the above-described example, the notification processing unit 14 is configured to transmit a call notification in accordance with a customer operation, this is not a limitation. The notification processing unit 14 may be configured to transmit a call notification on condition that the total amount exceeds the upper limit amount. In this case, for example, the display unit 106 may be caused to display the above-described message Ma and an upper limit excess screen containing a message giving a notification indicating that a clerk is being called instead of the upper limit excess screen in FIG. 4.

Furthermore, the notification processing for calling a clerk is not limited to the transmission of a call notification, and may be other processing. For example, when the POS terminal 10 includes a notification device such as a notification pole, the notification processing unit 14 may call a clerk by operating the notification device.

Returning to FIG. 3, the operation restriction unit 15 is one example of a restriction part. When the total amount calculated by the total amount calculation unit 12 exceeds the upper limit amount, the operation restriction unit 15 restricts operations of the POS terminal 10 performed by a customer. Specifically, when the total amount of merchandise exceeds the upper limit amount, the operation restriction unit 15 inhibits the operation of the registration processing unit 11 so that new merchandise is not additionally registered. Furthermore, when the total amount of merchandise exceeds the upper limit amount, the operation restriction unit 15 restricts (e.g., stops) the operation of the settlement processing unit 16 so that settlement processing is not executed. A state in which the operation restriction unit 15 restricts the operation (or behavior) of the POS terminal 10 is also hereinafter referred to as a "locked state".

Furthermore, when, in the locked state, a clerk code of a clerk who has authority to cancel the locked state via the operation unit 107 or the scanner unit 108 is input, the operation restriction unit 15 cancels the locked state, and creates a state in which merchandise registration and settlement processing are possible.

Specifically, when any code is input via the operation unit 107 or the scanner unit 108, the operation restriction unit 15 refers to the responsible-person master 1053, and determines whether or not the input code is registered in the responsible-person master 1053. Then, the operation restriction unit 15 cancels the locked state when the input code is registered in the responsible-person master 1053, and continues the locked state when the input code is not registered in the responsible-person master 1053. This restricts merchandise registration and settlement in the POS terminal 10 until the clerk cancels the locked state.

The settlement processing unit 16 executes settlement processing for the merchandise registered by the registration processing unit 11. For example, when the subtotal key is operated, the settlement processing unit 16 calculates the total amount of the merchandise based on sales data registered before the operation has been received. Next, the settlement processing unit 16 executes settlement processing of settling the calculated total amount of the merchandise with an amount (payment amount) paid by a customer. Here, the settlement processing unit 16 may perform the settlement processing by using the total amount calculated by the total amount calculation unit 12.

Furthermore, the settlement processing unit 16 calculates an amount of change by subtracting the total amount from the payment amount. Note that the payment amount may be paid not only by cash but based on information related to electronic settlement read via the scanner unit 108 and the card reading unit 110. Then, the settlement processing unit 16 controls the printer 111 to print a receipt of the transaction indicating the contents of the merchandise registration and the settlement processing, and ends the settlement processing.

Note that, when the total amount calculation unit 12 calculates a total amount in accordance with the operation of the subtotal key and the total amount exceeds the upper limit amount, the operation restriction unit 15 restricts the operation of the settlement processing unit 16. This enables the operation restriction unit 15 to inhibit settlement processing from being performed with the total amount exceeding the upper limit amount.

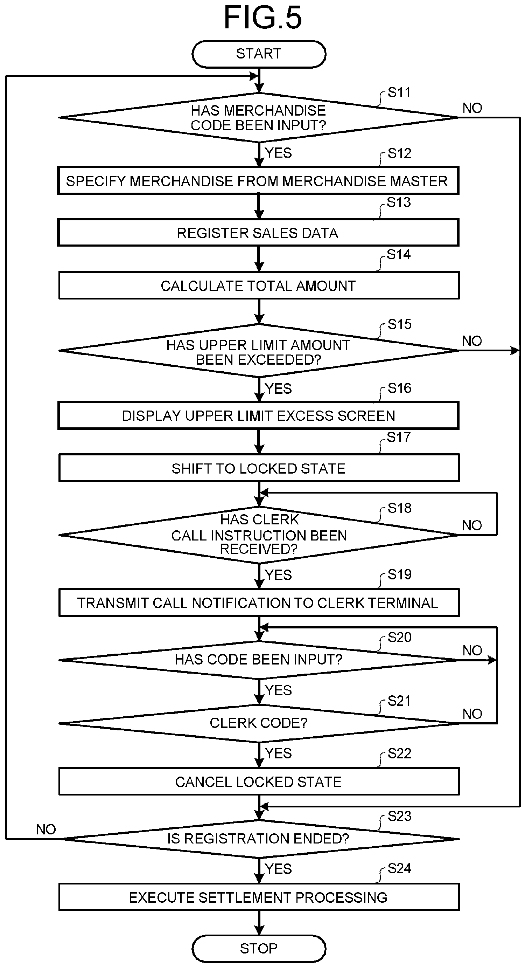

An operation example of the above-described POS terminal 10 will be described. FIG. 5 is a flowchart illustrating one example of processing executed by the POS terminal 10.

First, in the POS terminal 10, when registration processing is started in response to a customer operation, the registration processing unit 11 determines whether or not a merchandise code has been input via the scanner unit 108 (Step S11). When the merchandise code has not been input (Step S11; No), the processing proceeds to Step S23.

When the merchandise code has been input in Step S11 (Step S11; Yes), the registration processing unit 11 specifies a piece of merchandise corresponding to the input merchandise code based on the merchandise master 1052 (Step S12). Next, the registration processing unit 11 registers sales data related to the specified piece of merchandise in the RAM 103 or the like (Step S13).

Subsequently, the total amount calculation unit 12 calculates a total amount of the registered merchandise (Step S14). Next, the determination unit 13 determines whether or not the total amount calculated in Step S14 exceeds the upper limit amount (Step S15). Here, when the total amount is equal to or less than the upper limit amount (Step S15; No), the processing proceeds to Step S23.

In contrast, when the determination unit 13 determines, in Step S15, that the total amount exceeds the upper limit amount (Step S15; Yes), the notification processing unit 14 causes the display unit 106 to display the upper limit excess screen GA (Step S16). Furthermore, the operation restriction unit 15 shifts the POS terminal 10 into the locked state in order to inhibit registration operation and settlement operation for merchandise performed by the customer (Step S17).

Subsequently, the notification processing unit 14 waits until receiving a clerk call instruction via the upper limit excess screen GA (Step S18; No). Here, when the clerk call instruction is given (Step S18; Yes), the notification processing unit 14 transmits a call notification to the clerk terminal 20 (Step S19), and the processing proceeds to Step S20.

Subsequently, the operation restriction unit 15 waits until a code is input via the operation unit 107 or the scanner unit 108 (Step S20; No). When the code is input (Step S20; Yes), the operation restriction unit 15 refers to the responsible-person master 1053, and determines whether or not the input code matches a clerk code registered in the responsible-person master 1053 (Step S21). Here, when the input code is not registered in the responsible-person master 1053 (Step S21; No), the operation restriction unit 15 returns the processing to Step S20.

Furthermore, when the input code matches a clerk code registered in the responsible-person master 1053 (Step S21; Yes), the operation restriction unit 15 cancels the locked state of the POS terminal 10 (Step S22), and the processing proceeds to Step S23. Note that the display of the upper limit excess screen GA is erased with the cancellation of the locked state.

Here, in the POS terminal 10, a clerk confirms the registered merchandise after Step S16. The clerk can confirm the contents of the registered merchandise with a customer, or cancel a part of the registered merchandise. When a part of the merchandise is canceled, the registered merchandise can be easily canceled by, for example, deleting sales data since the merchandise to be purchased in one transaction has not been determined yet. Furthermore, after the clerk makes a confirmation, the customer can proceed with merchandise registration and settlement processing. Note that the confirmation contents of the clerk are not limited to the above-described example. For example, the clerk may issue a receipt or prepare a revenue stamp based on the contents of the registered merchandise or the like.

In Step S23, the control unit 100 determines whether or not an instruction to end registration of merchandise is given via the operation unit 107 or the like (Step S23). When an instruction to end registration is not given (Step S23; No), the control unit 100 returns the processing to Step S11.

Furthermore, when the instruction to end registration of merchandise is given in Step S23 (Step S23; Yes), the settlement processing unit 16 executes the settlement processing based on the total amount of merchandise registered so far (Step S24).

As described above, the POS terminal 10 according to the embodiment acquires a merchandise code of merchandise to be purchased by the customer in accordance with a customer operation. The POS terminal 10 registers information (sales data) related to the purchase amount of the merchandise corresponding to the acquired merchandise code. The POS terminal 10 calculates the total amount of the merchandise based on the registered information. When the total amount exceeds the upper limit amount, the POS terminal 10 executes processing for calling a clerk. Furthermore, when the total amount of the merchandise exceeds a predetermined upper limit amount, the POS terminal 10 restricts a customer operation related to merchandise registration.

This enables the POS terminal 10 to perform the processing for calling a clerk when the total amount of the merchandise exceeds the upper limit amount at the time of merchandise registration, so that the clerk can efficiently confirm the registered merchandise. Furthermore, when the total amount of the merchandise exceeds the upper limit amount, the POS terminal 10 can restrict the customer operation related to merchandise registration, so that additional registration of merchandise can be prevented.

Furthermore, when the total amount of the merchandise exceeds the upper limit amount, the POS terminal 10 causes the display unit 106 to display the operation screen (upper limit excess screen GA) having an operator capable of calling a clerk, and executes processing for calling the clerk in accordance with an operation to the operator. This enables the POS terminal 10 to call the clerk under the agreement of the customer, so that the clerk can be called in consideration of the customer.

Furthermore, when the total amount of the merchandise exceeds the upper limit amount, the POS terminal 10 restricts a customer operation related to execution of settlement processing for the registered merchandise. This enables the POS terminal 10 to restrict the customer operation related to execution of settlement processing when the total amount of the merchandise exceeds the upper limit amount, so that settlement of the merchandise with the total amount exceeding the upper limit amount can be prevented.

Note that the above-described embodiment can be appropriately modified and implemented by changing a part of the configuration or function of each of the above-described devices. Therefore, some modifications according to the above-described embodiment will be described below as other embodiments. Note that differences from the above-described embodiment will be mainly described below. Specifically, the same reference signs are attached to points common to the already described contents, and detailed description thereof will be omitted. Furthermore, the modifications to be described below may be implemented individually, or may be implemented appropriately in combination with each other.

### (First Modification)

Although, in the above-described embodiment, a mode in which the operation restriction unit 15 cancels the locked state in response to input of a clerk code registered in the responsible-person master 1053 in a case where the POS terminal 10 is in the locked state has been described, the condition for canceling the locked state is not limited thereto.

For example, when a predetermined cancellation code for cancellation is input or an operation for cancellation is performed via the operation unit 107 and the upper limit excess screen GA, the operation restriction unit 15 may cancel the locked state of the POS terminal 10. In this case, the operation for cancellation is not particularly limited, but it is preferable not to clearly indicate a method of the operation and an operator in order to prevent a customer operation. In this case, information input by the operation for cancellation can also be defined as a cancellation code.

### (Second Modification)

Although, in the above-described embodiment, a single POS terminal 10 capable of performing registration processing and settlement processing for merchandise has been described as one example of the merchandise sales data processing device, an application target is not limited thereto. For example, the present invention can be applied to, as one example of the merchandise sales data processing device, a registration device or system having a system configuration in which a registration device that performs registration processing and a settlement device that performs settlement processing are separated and both the devices are operated by a customer.

Here, the registration device may be a mobile terminal such as a smartphone carried by a customer or a mobile terminal such as a tablet terminal lent by a store to a customer. Furthermore, the settlement device may have a configuration of a stationary device provided in a store. In this case, sales data on merchandise registered by the registration device is delivered to a settlement terminal as settlement data for one transaction in response to the operation of the subtotal key, for example, and is used for settlement processing of the settlement terminal.

Note that a method of delivering the settlement data is not particularly limited. For example, the settlement data may be directly transmitted from the registration device to the settlement device, or may be transmitted from the registration device to the settlement device via the store server 30. Furthermore, the settlement data may be delivered to the settlement device by the registration device displaying an image obtained by converting the settlement data into a code symbol and the settlement device reading the code symbol.

In the modification, the registration processing unit 11, the total amount calculation unit 12, the determination unit 13, the notification processing unit 14, and the operation restriction unit 15 described above are mounted on the registration device. Furthermore, the above-described settlement processing unit 16 is mounted on the settlement device. Note that, when the total amount of the registered merchandise exceeds the upper limit amount, the operation restriction unit 15 preferably inhibits the settlement data from being delivered to the settlement device by, for example, inhibiting a merchandise registration operation and stopping a function of generating the settlement data.

Note that programs to be executed by the devices of the above-described embodiment are provided in a state of being preliminarily incorporated in the ROM, the storage unit, or the like. The programs to be executed by the devices of the above-described embodiment may be provided by being recorded in a computer-readable recording medium such as a CD-ROM, a flexible disk (FD), a CD-R, and a digital versatile disk (DVD) as a file in an installable format or an executable format.

Furthermore, the programs to be executed by the devices of the above-described embodiment may be provided by being stored on a computer connected to a network such as the Internet and downloaded via the network. Furthermore, the programs to be executed by the devices of the above-described embodiment may be provided or distributed via a network such as the Internet.

Although the embodiment of the present invention has been described above, the embodiment is presented as an example, and is not intended to limit the scope of the invention. The novel embodiment and the modification thereof can be implemented in various other forms, and various omissions, substitutions, changes, and combinations can be made without departing from the gist of the invention. The embodiment and the modification thereof are included in the scope and gist of the invention, and are included in the invention described in claims and the equivalent scope thereof.

### CITATION LIST

### Patent Literature

Patent Literature 1: JP 2015-141682 A

## Claims

1. A merchandise sales data processing device comprising:
an acquisition part that acquires identification information on merchandise in accordance with a customer operation;
a registration part that registers information related to a purchase amount of the merchandise corresponding to the identification information;
a calculation part that calculates a total amount of the merchandise based on the information registered by the registration part;
a notification part that executes processing of calling a clerk when the total amount exceeds a predetermined upper limit amount; and
a restriction part that restricts the customer operation related to registration of the merchandise when the total amount exceeds the predetermined upper limit amount.

2. The merchandise sales data processing device according to claim 1,
wherein the notification part causes a display unit to display an operation screen having an operator capable of calling a clerk, and executes processing of calling the clerk in accordance with an operation to the operator.

3. The merchandise sales data processing device according to claim 1 or 2, further comprising a settlement part that executes settlement processing for merchandise registered by the registration part,
wherein the restriction part restricts the customer operation related to execution of the settlement processing when the total amount exceeds a predetermined upper limit amount.

4. The merchandise sales data processing device according to any one of claims 1 to 3,
wherein the calculation part calculates the total amount each time the registration part performs registration or at timing when an operation to give an instruction to end the registration is performed.

5. The merchandise sales data processing device according to any one of claims 1 to 4, further comprising a reception part that receives input of a cancellation code for canceling restriction imposed by the restriction part,
wherein the restriction part cancels the restriction when the cancellation code is input.

6. A program causing a computer of a merchandise sales data processing device to function as:
an acquisition part that acquires identification information on merchandise in accordance with a customer operation;
a registration part that registers information on the merchandise corresponding to the identification information;
a calculation part that calculates a total amount of the merchandise that has been registered based on the information registered by the registration part;
a notification part that executes processing of calling a clerk when the total amount exceeds a predetermined upper limit amount; and
a restriction part that restricts the customer operation related to registration of the merchandise when the total amount exceeds the predetermined upper limit amount.
